# EUROPÄISCHE PATENTSCHRIFT

(11) **EP 0 546 288 B1**
(45) Veröffentlichungstag und Bekanntmachung des Hinweises auf die Patenterteilung: **27.12.1995**
(21) Anmeldenummer: 92117888.5
(22) Anmeldetag: 20.10.1992
(51) Int. Cl.: H02G 3/08

(54) **Einzelleitungsdichtungsstopfen für elektrische Leitungen**
Sealing gasket for unifilar electrical cables
Joint d'étanchéité pour câbles électriques unifilaires

(30) Priorität: 11.12.1991 DE 9115323 U
(43) Veröffentlichungstag der Anmeldung: 16.06.1993
(73) Patentinhaber: Grote & Hartmann GmbH & Co. KG, D-42369 Wuppertal (DE)
(72) Erfinder: Walther,Hans Michael,Dipl.-Ing., W-5980 Werdohl (DE); Zinn,Bernd, W-5829 Ennepetal (DE); Voss,Ute,Dipl.-Ing., W-5630 Remscheid (DE); Reinertz,Rudolf, W-5600 Wuppertal 2 (DE)
(74) Vertreter: Patentanwälte Dr. Solf & Zapf

(56) Entgegenhaltungen:
- EP-A- 0 121 644
- DE-A- 4 014 583

## Beschreibung

Die Erfindung betrifft einen Einzelleitungsdichtungsstopfen.

Mit einem derartigen Einzelleitungsdichtungsstopfen werden Schlitze zwischen einer Öffnung oder einem Durchgang in einer Gehäusewandung und der in das Gehäuse, beispielsweise einen wassergeschützten Stecker, eingesetzten, gecrimpten elektrischen Leitung gegen Wasserdurchtritt abgedichtet.

Es sind Einzelleitungsdichtungsstopfen der in Rede stehenden Art bekannt, die einen axialen zylindrischen Durchgang für die elektrische Leitung aufweisen, und die Außenkontur dieses Einzelleitungsdichtungsstopfens weist in der Regel einen zylindrischen Bereich für das Crimpen von entsprechenden Krallenarmen eines elektrischen Verbinders und im Anschluß daran ringstegförmige Dichtrippen auf.

Das Aufbringen solcher Einzelleitungsdichtungsstopfen erfolgt weitgehend automatisch mit hoher Geschwindigkeit. Solche automatischen Bestückungsverfahren sehen es vor, daß die Stopfen in einer vorbestimmten Ausrichtung auf eine Trägerband aufgebracht werden. Das Trägerband weist beispielsweise in regelmäßigen Abständen Durchbrüche auf, in welchen die Stopfen z.B. klemmgehaltert sind, wobei über eine Bandseite der zylindrische Bereich des Stopfens vorsteht, während von der anderen Bandseite der Stopfenbereich vorsteht, der die Dichtrippen aufweist.

Die bekannten maschinell arbeitenden Verfahren zum Aufbringen der Einzelleitungsdichtungsstopfen auf elektrische Leitungen bedürfen also einer Anlieferung der Stopfen in einer vorbestimmten Orientierung. Die Stopfenorientierung wird mittels Rütteleinrichtungen erreicht, die sich der anisotrope Ausbildung herkömmlicher Einzelleitungsdichtungsstopfen bedienen. Ausgenützt wird also bei dem Rüttelverfahren das leichte und schwere bzw. das schlanke zylindrische und das stärkere Dichtrippenende des herkömmlichen Einzelleitungsdichtungsstopfens. Das Rüttelverfahren arbeitet bis zu einer bestimmten Mindestgröße der Einzelleitungsdichtungsstopfen einwandfrei. Bei kleineren Einzelleitungsdichtungsstopfen hat sich das Rüttelverfahren jedoch als unzulänglich erwiesen, weil eine Vorzugsorientierung bei diesen Miniformen nicht mehr erreichbar ist.

Die Aufgabe der vorliegenden Erfindung besteht darin, einen Einzelleitungsdichtungsstopfen der eingangs genannten Art zu schaffen, der auch in Miniaturform eine Überführung des Stopfens in eine bevorzugte Ausrichtung, beispielsweise zur Bestückung eines Trägerbandes, zuläßt.

Gelöst wird diese Aufgabe durch einen Einzelleitungsdichtungsstopfen mit den Merkmalen des Anspruchs 1. Vorteilhafte Weiterbildungen der Erfindung sind in den abhängigen Ansprüchen angegeben.

Die Erfindung schafft also einen hoch symmetrischen Einzelleitungsdichtungsstopfen, vor allem einen Einzelleitungsdichtungsstopfen mit einer hoch symmetrischen Außenkontur, wodurch es beispielsweise für die Bestückung eines Trägerbandes mit den Einzelleitungsdichtungsstopfen lediglich erforderlich ist, die Stopfen in eine aufrecht stehende Position, beispielsweise durch Rütteln, zu überführen. Aufgrund der symmetrischen Ausbildung des erfindungsgemäßen Einzelleitungsdichtungsstopfens ist es unerheblich, welches Stopfenende das vordere oder das hintere Ende bei vorbestimmter Ausrichtung einnimmt. Es hat sich gezeigt, daß der erfindungsgemäße Dichtungsstopfen mittels herkömmlicher Rütteleinrichtungen ohne weiteres in eine axial orientierte Ausrichtung überführt werden kann, weshalb sich der erfindungsgemäße Dichtungsstopfen vor allem für Miniaturbauformen besonders eignet.

Durch den erfindungsgemäß symmetrischen Aufbau des Einzelleitungsdichtungsstopfens weist dieser zwei identische axiale dichtrippenfreie Endbereiche auf, die jeweils für das Crimpen von entsprechenden Krallenarmen eines elektrischen Verbinders geeignet sind.

Bei dem erfindungsgemäßen Einzelleitungsdichtungsstopfen befinden sich demnach die Dichtrippen im zentralen Stopfenbereich, also mittig zwischen den beiden Krallenarmanschlußbereichen. Der erfindungsgemäße Einzelleitungsdichtungsstopfen eignet sich beispielsweise zur Bestückung eines bei dem vorstehend genannten maschinell arbeitenden Verfahren verwendeten Trägerbandes mit Klemmöffnungen, durch welche die Stopfen mit einem ihrer schlanken Endbereiche hindurchgesteckt werden, wobei die außenliegende Flanke der auf diesen Bereich folgenden Rippe als Anschlagschulter dient, so daß der Dichtrippenteil des Stopfens von der anderen Seite des Trägerbandes vorsteht, und zwar zusammen mit dem anderen schlanken Anschlußbereich.

Vorteilhafterweise sind alle Dichtrippen ausgeprägt abgeflacht ausgebildet, wodurch eine bessere Dichtung gegenüber der Gehäusewandung erzielt wird als bei herkömmlichen Einzelleitungsdichtungsstopfen mit in axialer Richtung relativ schmalen Dichtrippen.

Vorteilhafterweise ist es ferner vorgesehen, am Grundkörper des Einzelleitungsdichtungsstopfens axial verlaufende Versteifungsrippen vorzusehen. Diese Versteifungsrippen sind in radialer Richtung grundsätzlich etwas schwächer ausgebildet als die ringstegförmigen Dichtrippen und sind entweder an diese oder bevorzugt an die außen liegenden Ringwülste angebunden. Grundsätzlich ist die Anzahl der axial verlaufenden, vorzugsweise über den Umfang des Grundkörpers gleichmäßig voneinander beabstandeten Versteifungsrippen ebenso beliebig wie die Gestalt dieser Rippen. Die längsverlaufenden Versteifungsrippen des in Miniaturbauform ausgeführten Einzelleitungsdichtungsstopfens sind jedoch bevorzugt im Querschnitt in etwa halbkreisförmig ausgebildet.

Nachfolgend soll die Erfindung anhand der Zeichnung näher erläutert werden; in diese zeigen:
- Fig. 1: eine Axialschnittansicht einer ersten Ausführungsform des erfindungsgemäßen Einzelleitungsdichtungsstopfens,
- Fig. 2: eine Axialschnittansicht einer weiteren Ausführungsform des erfindungsgemäßen Einzelleitungsdichtungsstopfens und
- Fig. 3: eine Schnittansicht längs der Pfeile A-B des Einzelleitungsdichtungsstopfens in Fig. 2.

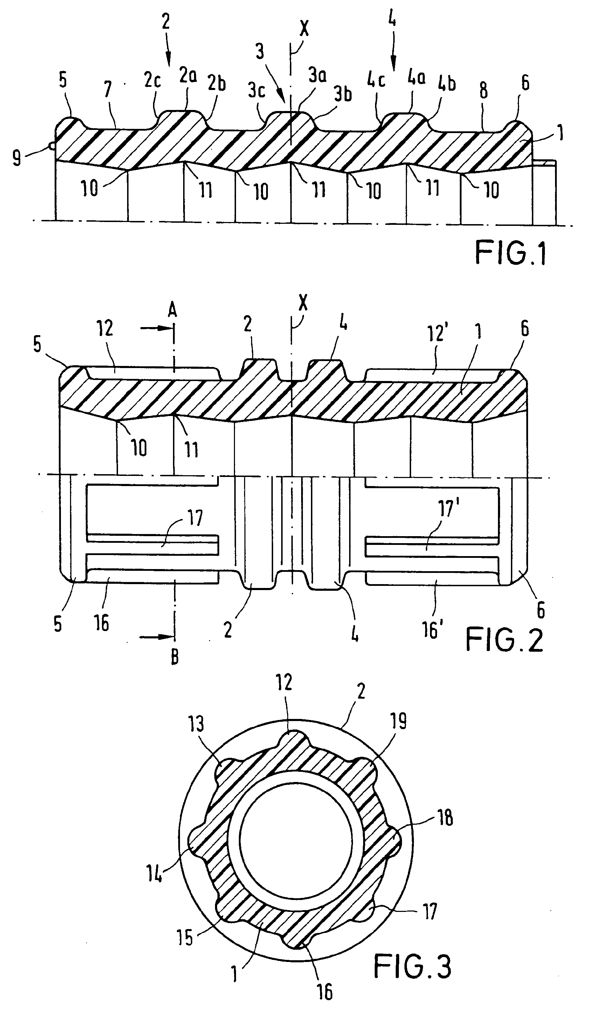

Nach Fig. 1 umfaßt der aus einem elastischen Material, wie z.B. aus Gummi oder Kunststoff bestehende Einzelleitungsdichtungsstopfen einen zylindrischen Grundkörper 1 für den Durchgang einer elektrischen Leitung, und der Grundkörper 1 weist eine spezielle Außenkontur sowie eine spezielle Innenkontur auf.

Die Außenkontur des Einzelleitungsdichtungsstopfens sieht eine Mehrzahl von Erhebungen und Senken vor, wobei drei zentrale Erhebungen ringstegförmige Dichtrippen 2, 3 und 4 bilden. An den axial äußeren Enden wird die Außenkontur des Einzelleitungsdichtungsstopfens bestimmt durch Ringwülste 5 und 6.

Die Außenkontur des Einzelleitungsdichtungsstopfens ist hoch symmetrisch ausgebildet, und zwar mit Bezug auf die den Grundkörper 1 bzw. den Stopfen in axialer Richtung halbierende Radialebene, die in der Figur senkrecht zur Zeichnungsebene verläuft, wobei die Schnittgerade dieser Radialebene mit der Zeichnungsebene in der Figur mit X bezeichnet ist. Diese Radialebene stellt eine Spiegelsymmetrieebene für die Außenkontur des Einzelleitungsdichtungsstopfens dar; d.h., daß die Außenkontur links und rechts von der Spiegelsymmetrieebene identisch ausgebildet ist. Demnach entsprechen in ihrer Gestalt die Ringwülste 5 und 6 einander ebenso wie die beiden außen liegenden Dichtrippen 2 und 4 einander in ihrer Gestalt entsprechen. Da die Spiegelsymmetrieebene die zentrale Dichtrippe 3 durchsetzt, befinden sich deren axiale Hälften jeweils auf einer Seite der Spiegelsymmetrieebene.

Ein wesentlicher Aspekt der Erfindung besteht in dem hoch symmetrischen Aufbau des Einzelleitungsdichtungsstopfens, der gewährleistet, daß der Einzelleitungsdichtungsstopfen mit Hinblick auf seine Außenkontur zwei funktional identische axiale Hälften aufweist, so daß der erfindungsgemäße Stopfen unabhängig von seiner axialen Ausrichtung dieselbe Vorzugsstellung einzunehmen vermag, beispielsweise auf dem eingangs erwähnten Trägerband für maschinell arbeitende Einzelleitungsdichtungsstopfen-Bestückungsverfahren.

Wie aus der Figur hervorgeht, ist jede Dichtrippe durch einen zentralen radial umlaufenden abgeflachten Bereich 2a, 3a bzw. 4a gekennzeichnet, der eine entsprechend große Dichtfläche mit Bezug auf eine Gehäusewand bildet. An den abgeflachten Bereich jeder Dichtrippe schließen sich gleich ausgebildete Flankenbereiche 2b, 2c; 3b, 3c; 4b, 4c an. Die Stärke der Dichtrippen 2, 3 und 4 in radialer Richtung ist geringer als die Wandung des zylindrischen Grundkörpers 1.

Die Dichtrippen 2, 3 und 4 bilden einen zentralen Dichtungsbereich des Stopfens, der dazu bestimmt ist, in Dichtungseingriff mit Aussparungen in einem Gehäuse zu gelangen. An den Dichtungsabschnitt schließen sich beidseitig zylindrisch verlaufende Bereiche 7 und 8 an, die außen gelegene Anschlußbereiche für entsprechende Krallenarme eines elektrischen Verbinders darstellen, wobei es aufgrund der identischen Ausbildung der Bereiche 7 und 8 unerheblich ist, welcher dieser beiden Bereiche in Eingriff mit den Krallenarmen gelangt. Hier liegt ein großer Vorzug des erfindungsgemäßen Einzelleitungsdichtungsstopfens, der im Gegensatz zu den Stopfen gemäß dem Stand der Technik keine eindeutige axiale Ausrichtung benötigt, und demnach mit weniger Aufwand ausgerichtet werden kann, als die herkömmlichen Stopfen. Die Bauform des erfindungsgemäßen Einzelleitungsdichtungsstopfens eignet sich insbesondere zur Rüttelorientierung von Miniaturbauformen.

Die axial außen liegenden Ringwülste 5 und 6 weisen einen konkaven Querschnitt auf, und sind sowohl in radialer wie in axialer Richtung nicht so stark wie die Dichtrippen 2, 3 und 4.
An der einen, der in der Figur linken Stirnseite des Stopfens sind punktförmige Materialerhebungen 9 zur Kennzeichnung des Stopfens ausgebildet.

Der Einzelleitungsdichtungsstopfen weist neben einer speziellen Außenkontur auch eine speziell ausgebildete Innenkontur auf, die durch einen in der Schnittbilddarstellung der Figur zickzackförmigen Verlauf gekennzeichnet ist, der im dreidimensionalen Original einen zieharmonikaartigen Verlauf aufweist. Die Innenkontur weist demnach gleich starke in axialer Richtung gleichmäßig beabstandete Vorsprünge 10 auf, die beidseits gleichmäßig flach bis zu einem Punkt 11 abfallen, der unterhalb des zentralen Bereichs der Dichtrippen zu liegen kommt. Durch diese Struktur der Innenkontur wird erreicht, daß der Stopfen unter relativ geringer Reibung auf eine elektrische Leitung aufgebracht werden kann, wobei die Senken an den Punkten 11 die Einführbarkeit der mit dem Stopfen bestückten elektrischen Leitung in eine Gehäuseausnehmung dadurch erleichtert, daß die den Senken gegenüberliegenden Dichtrippen in radialer Richtung nach innen ausweichen können, bevor eine Materialkomprimierung vor allem in radialer Richtung eintritt, welche die erwünschte Dichtfunktion erbringt.

Fig. 2 zeigt eine weitere Ausführungsform des erfindungsgemäßen Einzelleitungsdichtungsstopfens, die im wesentlichen bis auf konstruktive Details der anhand von Fig. 1 beschriebenen Ausführungsform entspricht mit dem Unterschied, daß lediglich zwei ringstegförmige Dichtrippen 2, 4 vorgesehen sind, die beidseitig der Symmetrieebene X in unmittelbarer Nähe zu dieser vorgesehen sind, wobei die Spiegelsymmetrieebene X einen dichtrippenfreien Bereich des Grundkörpers 1 durchsetzt, und wobei sich an den dichtrippenfreien Bereich, der in axialer Richtung des Grundkörpers 1 etwa so breit ist wie die Dichtrippen 2, 4, die beiden Dichtrippen 2 und 4 anschließen.

Ein weiterer Unterschied zu der Ausführungsform des Einzelleitungsdichtungsstopfens in Fig. 1 besteht darin, daß in Fig. 2 auf den dichtrippenfreien Bereichen zwischen den beiden Dichtrippen 2 und 4 und den außen gelegenen Ringwülsten 5 und 6 Versteifungsrippen 12-19 vorgesehen sind, die parallel zur Längsachse des Grundkörpers 1 verlaufen sowie über den Umfang des Grundkörpers 1 verteilt angeordnet sind, und zwar mit einem gleichmäßigen Abstand zueinander. Die radiale Anordnung der Versteifungsrippen 12-19 geht aus Fig. 3 hervor, die den Einzelleitungsdichtungsstopfen von Fig. 2 in einer Schnittansicht längs den Pfeilen A und B zeigt. Aus Fig. 3 geht auch hervor, daß die Versteifungsrippen 12-19 zylinderhalbschalenförmig ausgebildet sind. Die Stärke der Versteifungsrippen 12-19 in radialer Richtung ist geringer als diejenige der Dichtrippen 2 und 4. Insbesondere sind die Versteifungsrippen 12-19 um ein Maß schwächer in radialer Richtung als die Dichtrippen 2, 4, das gewährleistet, daß die Dichtrippen 2 und 4 ihre Dichtfunktion durch elastische Komprimierung zu erfüllen vermögen, ohne daran durch die Versteifungsrippen 12-19 behindert zu sein.

Wie ferner aus Fig. 2 hervorgeht, sind beidseits der mittig angeordneten Dichtrippen 2 und 4 zwei voneinander unabhängige Sätze von Versteifungsrippen 12-19 und 12′-19′ vorgesehen, wobei jede dieser Dichtrippen mit ihrem außen liegenden Ende angebunden ist an den Ringwulst 5 bzw. den Ringwulst 6. Im dargestellten Ausführungsbeispiel entspricht die radiale Stärke der Versteifungsrippen derjenigen der Dichtwülste.

## Patentansprüche

1. Einzelleitungsdichtungsstopfen aus elastischem Material zum Abdichten einer elektrischen Leitung gegenüber einem Durchgang in einer Gehäusewandung, mit einem zylindrischen Grundkörper (1) und mit einem axialen Durchgang für die elektrische Leitung und einer Außenkontur mit ringstegförmigen Dichtrippen (2,3,4), wobei die Dichtstopfenaußenkontur spiegelsymmetrisch mit Bezug auf die den Grundkörper (1) axial halbierende Radialebene ausgebildet ist und daß beiderseits der axial halbierende Radialebene ein zylindrisch verlaufender Bereich (7, 8) für das Crimpen von entsprechenden Krallenarmen eines elektrischen Verbinders vorgesehen ist.

2. Einzelleitungsdichtungsstopfen nach Anspruch 1,
dadurch **gekennzeichnet**,
daß die ringstegförmigen Dichtrippen (2, 3, 4) zwischen zwei schräg nach außen abfallenden Flankenbereichen (2b, 2c; 3b, 3c; 4b, 4c) einen zentralen abgeflachten Bereich (2a; 3a; 4a) umfassen.

3. Einzelleitungsdichtungsstopfen nach Anspruch 1 oder 2,
dadurch **gekennzeichnet**,
daß alle Dichtrippen (2, 3, 4) in radialer Richtung gleich stark ausgebildet sind.

4. Einzelleitungsdichtungsstopfen nach Anspruch 2 oder 3,
dadurch **gekennzeichnet**,
daß alle Dichtrippen (2, 3, 4) in axialer Richtung gleich lang ausgebildet sind.

5. Einzelleitungsdichtungsstopfen nach einem oder mehreren der Ansprüche 1 bis 4,
dadurch **gekennzeichnet**,
daß die Dichtrippen (2, 3, 4) gleichmäßig voneinander beabstandet sind.

6. Einzelleitungsdichtungsstopfen nach einem oder mehreren der vorangehenden Ansprüche,
**gekennzeichnet** durch
eine axial mittig angeordnete , von der Spiegelsymmetrieebene durchsetzte Dichtrippe (3).

7. Einzelleitungsdichtungsstopfen nach einem oder mehreren der Ansprüche 1 bis 6,
dadurch **gekennzeichnet**,
daß der Abstand zwischen den Dichtrippen größer ist als ihre axiale Erstreckungslänge.

8. Einzelleitungsdichtungsstopfen nach Anspruch 7 oder 8,
**gekennzeichnet** durch
insgesamt drei Dichtringe (2, 3, 4).

9. Einzelleitungsdichtungsstopfen nach einem oder mehreren der vorangehenden Ansprüche 1 bis 8,
dadurch**gekennzeichnet,**
daß die im wesentlichen zylindrisch verlaufende Bereiche (7, 8) an den zentralen Dichtungsbereich nach außen hin anschließend angeordnet sind.

10. Einzelleitungsdichtungsstopfen nach Anspruch 9,
**gekennzeichnet** durch
Ringwülste (5, 6) an den axialen Enden des zylindrischen Grundkörpers (1).

11. Einzelleitungsdichtungsstopfen nach Anspruch 10,
dadurch **gekennzeichnet**,
daß die Ringwülste (5, 6) in radialer Richtung schwächer sind als die Dichtrippen (2, 3, 4).

12. Einzelleitungsdichtungsstopfen nach Anspruch 10 oder 11,
dadurch **gekennzeichnet**,
daß die Ringwülste (5, 6) in axialer Richtung kürzer sind als die Dichtrippen (2, 3, 4).

13. Einzelleitungsdichtungsstopfen nach einem oder mehreren der Ansprüche 10 bis 12,
dadurch **gekennzeichnet**,
daß die Ringwülste (5, 6) ausgehend von einem zentralen Zenit beidseitig gleichmäßig abfallende Flanken aufweisen.

14. Einzelleitungsdichtungsstopfen nach einem oder mehreren der Ansprüche 1 bis 13,
dadurch **gekennzeichnet**,
daß die Innenkontur des zylindrischen Grundkörpers (1) zieharmonikaartig ausgebildet ist, wobei radial in den Grundkörper (1)) zurückgesetzte Bereiche (10) im Bereich unterhalb der Dichtrippen (2, 3, 4) zu liegen kommen.

15. Einzelleitungsdichtungsstopfen nach einem oder mehreren der Ansprüche 2 bis 14,
dadurch **gekennzeichnet**,
daß die Stärke der Dichtrippen (2, 3, 4) in radialer Richtung geringer ist als die Wandung des zylindrischen Grundkörpers (1).

16. Einzelleitungsdichtungsstopfen nach einem oder mehreren der Ansprüche 1 bis 5 sowie 9 bis 15,
dadurch **gekennzeichnet**,
daß die Spiegelsymmetrieebene (X) einen dichtrippenfreien Bereich des Grundkörpers 1 durchsetzt.

17. Einzelleitungsdichtungsstopfen nach Anspruch 16,
**gekennzeichnet** durch
zwei unmittelbar an den dichtrippenfreien Bereich angrenzende Dichtrippen (2, 4), wobei der dichtrippenfreie Bereich in axialer Richtung des Grundkörpers (1) etwa so breit ist wie die Dichtrippen (2, 4).

18. Einzelleitungsdichtungsstopfen nach einem der Ansprüche 1 bis 17,
**gekennzeichnet** durch
axial verlaufende Versteifungsrippen (12-19).

19. Einzelleitungsdichtungsstopfen nach Anspruch 18,
dadurch **gekennzeichnet**,
daß die Versteifungsrippen (12-19) über den Umfang des Grundkörpers (1) im wesentlichen gleichmäßig voneinander beabstandet sind.

20. Einzelleitungsdichtungsstopfen nach Anspruch 18 oder 19,
dadurch **gekennzeichnet**,
daß die Versteifungsrippen (12-19) in radialer Richtung schwächer ausgebildet sind als die ringstegförmigen Dichtrippen (2, 4).

21. Einzelleitungsdichtungsstopfen nach Anspruch 20,
dadurch **gekennzeichnet**,
daß die Versteifungsrippen (12-19) in radialer Richtung gleich stark ausgebildet sind wie die außen am Grundkörper (1) angeordneten Ringwülste (5, 6).

22. Einzelleitungsdichtungsstopfen nach einem der Ansprüche 18 bis 21,
dadurch **gekennzeichnet**,
daß sich die Versteifungsrippen (12-19) im wesentlichen über die gesamte axiale Länge des Grundkörpers (1) erstrecken.

23. Einzelleitungsdichtungsstopfen nach Anspruch 22,
dadurch **gekennzeichnet**,
daß die Versteifungsrippen (12-19) von den ringstegförmigen Dichtrippen (2, 4) in axialer Richtung beabstandet sind.

24. Einzelleitungsdichtungsstopfen nach einem der Ansprüche 18 bis 23,
dadurch **gekennzeichnet**,
daß die Versteifungsrippen (12-19) an die Ringwülste (5, 6) angebunden sind.

25. Einzelleitungsdichtungsstopfen nach einem der Ansprüche 18 bis 24,
**gekennzeichnet** durch
im wesentlichen zylinderhalbschalenförmige Versteifungsrippen (12-19).

## Claims

1. Single wire sealing plug made of elastic material for sealing off an electric wire with respect to a passage in a housing wall, having a cylindrical base body (1) and having an axial passage for the electric wire and an outer contour with annular-web-shaped sealing ribs (2,3,4), the outer contour of the sealing plug being designed to be mirror-symmetrical in relation to the radial plane axially bisecting the base body (1), and a cylindrical running region (7,8) for the crimping of corresponding claw arms of an electric connector being provided on both sides of the axially bisecting radial plane.

2. Single wire sealing plug according to claim 1, characterised in that the annular-web-shaped sealing ribs (2,3,4) comprise a central flattened region (2a;3a;4a) between obliquely outwardly sloping flank regions (2b,2c;3b,3c;4b,4c).

3. Single wire sealing plug according to claim 1 or 2, characterised in that all the sealing ribs (2,3,4) are formed with the same strength in the radial direction.

4. Single wire sealing plug according to claim 2 or 3, characterised in that all the sealing ribs (2,3,4) are formed with the same length in the axial direction.

5. Single wire sealing plug according to one or more of claims 1 to 4, characterised in that the sealing ribs (2,3,4) are uniformly spaced apart from one another.

6. Single wire sealing plug according to one or more of the preceding claims, characterised by a sealing rib (3) which is arranged axially centrally and through which the plane of mirror symmetry passes.

7. Single wire sealing plug according to one or more of claims 1 to 6, characterised in that the distance between the sealing ribs is greater than their axial linear length.

8. Single wire sealing plug according to claim 6 or 7, characterised by a total of three sealing ribs (2,3,4).

9. Single wire sealing plug according to one or more of the preceding claims 1 to 8, characterised in that the substantially cylindrically running regions (7,8) are arranged outwardly adjoining the central sealing region.

10. Single wire sealing plug according to claim 9, characterised by ring beads (5,6) at the axial ends of the cylindrical base body (1).

11. Single wire sealing plug according to claim 10, characterised in that the ring beads (5,6) are weaker in the radial direction than the sealing ribs (2,3,4).

12. Single wire sealing plug according to claim 10 or 11, characterised in that the ring beads (5,6) are shorter in the axial direction than the sealing ribs (2,3,4).

13. Single wire sealing plug according to one or more of claims 10 to 12, characterised in that the ring beads (5,6) have flanks which slope uniformly on both sides starting from a central zenith.

14. Single wire sealing plug according to one or more of claims 1 to 13, characterised in that the inner contour of the cylindrical base body (1) is formed as a concertina, regions (10) set back radially into the base body (1) being located in the region beneath the sealing ribs (2,3,4).

15. Single wire sealing plug according to one or more of claims 2 to 14, characterised in that the strength of the sealing ribs (2,3,4) in the radial direction is less than that of the wall of the cylindrical base body (1).

16. Single wire sealing plug according to one or more of claims 1 to 5 and 9 to 15, characterised in that the plane of mirror symmetry (X) passes through a region of the base body (1) which is free of sealing ribs.

17. Single wire sealing plug according to claim 16, characterised by two sealing ribs (2,4) immediately adjacent to the region which is free of sealing ribs, the region which is free of sealing ribs being approximately as wide in the axial direction of the base body (1) as the sealing ribs (2,4).

18. Single wire sealing plug according to one of claims 1 to 17, characterised by axially running reinforcing ribs (12-19).

19. Single wire sealing plug according to claim 18, characterised in that the reinforcing ribs (12-19) are spaced apart from one another substantially uniformly about the circumference of the base body (1).

20. Single wire sealing plug according to claim 18 or 19, characterised in that the reinforcing ribs (12-19) are formed weaker in the radial direction than the annular web shaped sealing ribs (2,4).

21. Single wire sealing plug according to claim 20, characterised in that the reinforcing ribs (12-19) are formed with the same strength in the radial direction as the ring beads (5,6) arranged externally on the base body (1).

22. Single wire sealing plug according to one of claims 18 to 21, characterised in that the reinforcing ribs (12-19) extend substantially over the entire axial length of the base body (1).

23. Single wire sealing plug according to claim 22, characterised in that the reinforcing ribs (12-19) are spaced apart from the annular web shaped sealing ribs (2,4) in the axial direction.

24. Single wire sealing plug according to one of claims 18 to 23, characterised in that the reinforcing ribs (12-19) are joined to the ring beads (5,6).

25. Single wire sealing plug according to one of claims 18 to 24, characterised by reinforcing ribs (12-19) substantially in the shape of half the curved surface of a cylinder.

## Revendications

1. Joint d'étancheité pour câbles électriques unifilaires, réalisé en une matière élastique pour étancher un câble électrique par rapport à un passage dans une paroi d'enveloppe, ce joint comportant un corps de base cylindrique (1) et un passage axial pour le câble électrique, et ayant un contour extérieur avec des nervures d'étanchéité en forme de barrettes annulaires (2, 3, 4), le contour extérieur du joint d'étanchéité étant inversement symétrique par rapport au plan radial séparant axialement en deux le corps de base (1), et que, de part et d'autre du plan radial qui effectue la coupure axiale en deux, il est prévu une région cylindrique (7, 8) pour le sertissage de bras crochus respectifs d'un connecteur électrique.

2. Joint d'étanchéité pour câbles électriques unifilaires selon la revendication 1,
caractérisé en ce que les nervures en forme de barrettes annulaires (2, 3, 4) entourent, entre deux régions de flanc inclinées vers l'extérieur (2b, 2c ; 3b, 3c ; 4b, 4c), une région centrale aplanie (2a ; 3a ; 4a).

3. Joint d'étanchéité pour câbles électriques unifilaires selon la revendication 1 ou 2,
caractérisé en ce que toutes les nervures d'étanchéité (2, 3, 4) ont la même épaisseur radiale.

4. Joint d'étanchéité pour câbles électriques unifilaires selon les revendications 2 et 3,
caractérisé en ce que toutes les nervures d'étanchéité (2, 3, 4) ont la même longueur axiale.

5. Joint d'étanchéité pour câbles électriques unifilaires selon l'une ou plusieurs des revendications 1 à 4,
caractérisé en ce que les nervures d'étanchéité (2, 3, 4) sont séparées entre elles par le même intervalle.

6. Joint d'étanchéité pour câbles électriques unifilaires selon l'une ou plusieurs des revendications précédentes, caractérisé par une nervure d'étanchéité (3) disposée centralement dans la direction axiale et traversée par le plan de symétrie inversé.

7. Joint d'étanchéité pour câbles électriques unifilaires selon l'une ou plusieurs des revendications 1 à 6,
caractérisé en ce que la distance entre les nervures d'étanchéité est plus grande que leur étendue axiale.

8. Joint d'étanchéité pour câbles électriques unifilaires selon la revendication 6 ou 7,
caractérisé par trois nervures d'étanchéité en total (2,3,4).

9. Joint d'étanchéité pour câbles électriques unifilaires selon l'une ou plusieurs des revendications précédentes 1 à 8,
caractérisé par le fait que les régions (7, 8) s'étendant sensiblement sous une forme cylindrique font suite, vers l'extérieur, à la région d'étanchéité centrale.

10. Joint d'étanchéité pour câbles électriques unifilaires selon la revendication 9,
caractérisé par des bourrelets annulaires (5, 6) prévus aux extrémités axiales du corps de base cylindrique (1).

11. Joint d'étanchéité pour câbles électriques unifilaires selon la revendication 10,
caractérisé en ce que les bourrelets annulaires (5, 6) ont une épaisseur radiale plus faible que les nervures d'étanchéité (2, 3, 4).

12. Joint d'étanchéité pour câbles électriques unifilaires selon la revendication 10 ou 11,
caractérisé en ce que les bourrelets annulaires (5, 6) ont une longueur axiale plus faible que les nervures d'étanchéité (2, 3, 4).

13. Joint d'étanchéité pour câbles électriques unifilaires selon l'une ou plusieurs des revendications 10 à 12,
caractérisé en ce que les bourrelets annulaires (5, 6) présentent des flancs à inclinaison constante de part et d'autre d'un sommet central.

14. Joint d'étanchéité pour câbles électriques unifilaires selon l'une ou plusieurs des revendications 1 à 13,
caractérisé en ce que le contour intérieur du corps de base cylindrique (1) est en forme d'accordéon, des régions (10) radialement en retrait dans le corps de base (1) étant placées dans la zone en dessous des nervures d'étanchéité (2, 3, 4).

15. Joint d'étanchéité pour câbles électriques unifilaires selon l'une ou plusieurs des revendications 2 à 14,
caractérisé en ce que l'épaisseur des nervures d'étanchéité (2, 3, 4) dans la direction radiale est plus faible que la paroi du corps de base cylindrique (1).

16. Joint d'étanchéité pour câbles électriques unifilaires selon l'une ou plusieurs des revendications 1 à 5, ainsi que 9 à 15,
caractérisé en ce que le plan de symétrie inversé (X) traverse une zone du corps de base (1) sans nervures d'étanchéité.

17. Joint d'étanchéité pour câbles électriques unifilaires selon la revendication 16,
caractérisé par deux nervures d'étanchéité (2, 4) directement voisines de la région sans nervures d'étanchéité, cette région sans nervures d'étanchéité ayant, dans la direction axiale du corps de base (1), sensiblement la largeur des nervures d'étanchéité (2, 4).

18. Joint d'étanchéité pour câbles électriques unifilaires selon l'une des revendications 1 à 17,
caractérisé par des nervures de renforcement (12-19) s'étendant dans la direction axiale.

19. Joint d'étanchéité pour câbles électriques unifilaires selon la revendication 18,
caractérisé en ce que les nervures de renforcement (12-19) sont disposées sensiblement à intervalles réguliers sur la périphérie du corps de base (1).

20. Joint d'étanchéité pour câbles électriques unifilaires selon la revendication 18 ou 19,
caractérisé en ce que les nervures de renforcement (12-19) ont une plus faible épaisseur dans la direction radiale que les nervures d'étanchéité (2, 4) en forme de barrettes annulaires.

21. Joint d'étanchéité pour câbles électriques unifilaires selon la revendication 20,
caractérisé en ce que les nervures de renforcement (12-19) ont la même épaisseur radiale que les bourrelets annulaires (5,6) prévus sur l'extérieur du corps de base (1).

22. Joint d'étanchéité pour câbles électriques unifilaires selon l'une des revendications 18 à 21,
caractérisé en ce que les nervures de renforcement (12-19) s'étendent sensiblement sur toute la longueur du corps de base (1).

23. Joint d'étanchéité pour câbles électriques unifilaires selon la revendication 22,
caractérisé en ce que les nervures de renforcement (12-19) sont placées à une certaine distance axiale des nervures d'étanchéité en forme de barrettes annulaires (2, 4).

24. Joint d'étanchéité pour câbles électriques unifilaires selon l'une des revendications 18 à 23,
caractérisé en ce que les nervures de renforcement (12-19) sont attachées aux bourrelets annulaires (5, 6).

25. Joint d'étanchéité pour câbles électriques unifilaires selon l'une des revendications 18 à 24,
caractérisé par des nervures de renforcement (12-19) ayant sensiblement la forme de demi-coupelles cylindriques.
